# FASCICULE DE BREVET EUROPEEN

(11) **EP 2 372 974 B1**
(45) Date de publication et mention de la délivrance du brevet: **07.03.2018**
(21) Numéro de dépôt: 11368011.0
(22) Date de dépôt: 29.03.2011
(51) Int. Cl.: H04L 29/06

(54) **PROCÉDÉ DE SÉCURISATION DE DONNÉES ET/OU DES APPLICATIONS DANS UNE ARCHITECTURE EN NUAGE**
VERFAHREN ZUR SICHERUNG DATEN UND/ODER ANWENDUNGEN IN CLOUD COMPUTING ARCHITECTURE
METHOD FOR SECURING DATA AND / OR APPLICATIONS IN CLOUD COMPUTING ARCHITECTURE

(30) Priorité: 02.04.2010 FR 1001382
(43) Date de publication de la demande: 05.10.2011
(73) Titulaire: Jung, Matthias, 06250 Mougins (FR); Loureiro, Sergio, 06600 Antibes (FR)
(72) Inventeur: Jung, Matthias, 06250 Mougins (FR); Loureiro, Sergio, 06600 Antibes (FR)
(74) Mandataire: Macquet, Christophe

(56) Documents cités:
- US-A1- 2008 083 036
- US-A1- 2009 228 967
- ITANI W ET AL: "Privacy as a Service: Privacy-Aware Data Storage and Processing in Cloud Computing Architectures", DEPENDABLE, AUTONOMIC AND SECURE COMPUTING, 2009. DASC '09. EIGHTH IEEE INTERNATIONAL CONFERENCE ON, IEEE, PISCATAWAY, NJ, USA, 12 décembre 2009 (2009-12-12), pages 711-716, XP031610175, ISBN: 978-0-7695-3929-4
- JENSEN M ET AL: "On Technical Security Issues in Cloud Computing", CLOUD COMPUTING, 2009. CLOUD '09. IEEE INTERNATIONAL CONFERENCE ON, IEEE, PISCATAWAY, NJ, USA, 21 septembre 2009 (2009-09-21), pages 109-116, XP031544638, ISBN: 978-1-4244-5199-9

## Description

La présente invention concerne un procédé de sécurisation de données et/ou des applications dans une architecture informatique en nuage (« cloud », en anglais). Elle concerne plus particulièrement un tel procédé dans lequel l'architecture comprend - un ensemble de serveurs virtuels identifiés par des identifiants serveurs, chaque serveur virtuel étant associé à un ou plusieurs disques mémoire virtuels, chaque disque mémoire virtuel étant matérialisé par un ou plusieurs espaces mémoire dans un ou plusieurs disques mémoire physiques, - une interface d'administration permettant à un utilisateur distant d'accéder, au travers d'un réseau du type Internet, à un ou plusieurs serveurs virtuels qui lui sont dédiés parmi l'ensemble des serveurs virtuels au moyen d'une clé spécifique à l'utilisateur et/ou à chaque serveur virtuel, et d'administrer lesdits serveurs virtuels dédiés, et - des composants d'interface pour la création et la gestion de l'ensemble des serveurs virtuels.

Les infrastructures en tant que services, ou IaaS, sont des infrastructures informatiques récentes qui sont mises en place dans des architectures informatiques en nuage. De telles infrastructures IaaS sont fournies par exemple par Amazon™, Rackspace™, Sun Microsystems™, IBM™, Microsoft™ ainsi que par certains hébergeurs. Amazon™ est aujourd'hui leader dans la fourniture de ces infrastructures. L'infrastructure en tant que service fournie par Amazon™ est appelée EC2™.

La sécurisation des données gérées au sein d'une architecture informatique dynamique en nuage est complexe. En effet, ces données sont gérées par des serveurs virtuels et sont stockées sur les disques eux-mêmes virtuels, et non pas par des serveurs physiques et des disques physiques distincts les uns des autres.

Les attaques ou manipulation visant à acquérir des données d'un utilisateur dans une architecture en nuage sont en général des attaques par canaux auxiliaires susceptibles de provenir, non seulement, de l'extérieur, c'est-à-dire de tiers non utilisateurs de l'architecture, mais aussi, des autres utilisateurs de l'architecture voire des fournisseurs de services. Par exemple, de telles attaques par canaux auxiliaires exploitent les données d'administration de l'infrastructure partagée de façon à déduire des informations sur les applications ou sur les utilisateurs.

C'est la raison pour laquelle les utilisateurs de services n'ont qu'une confiance limitée dans la capacité des architectures informatique en nuage pour maintenir l'intégrité et la confidentialité de leurs données.

Certes, on a imaginé des procédés de sécurisation des données introduites dans l'architecture, par chiffrement. Toutefois, ces procédés sont complexes à mettre en oeuvre et lourds en administration, en particulier lorsque les utilisateurs disposent d'un nombre important de serveurs virtuels gérant des données multiples et diversifiées. D'ailleurs, ces procédés sont des procédés traditionnels, qui sont prévus pour être déployés dans des périmètres d'activité précis qui n'évoluent pas ou que très graduellement. Ils ne sont pas applicables aux architectures dynamiques de l'informatique en nuage. Le document US 2008/083036 A1 décrit un système qui permet à un référentiel de données basé sur le cloud de fonctionner comme une "drop box" sécurisée pour des données qui correspondent à un utilisateur. Compte tenu de ce qui précède, un problème que se propose de résoudre l'invention est de sécuriser les données d'un utilisateur dans une architecture informatique dynamique en nuage, de manière simple et sans nécessiter une administration lourde.

La solution proposée de l'invention à ce problème a pour objet un procédé de sécurisation de données et/ou des applications dans une architecture informatique en nuage comprenant :
un ensemble de serveurs virtuels identifiés par des identifiants serveurs, chaque serveur virtuel étant associé à un ou plusieurs disques mémoire virtuels, chaque disque mémoire virtuel étant matérialisé par un ou plusieurs espaces mémoire dans un ou plusieurs disques mémoire physiques,
une interface permettant à un utilisateur distant d'accéder, au travers d'un réseau du type Internet, à un ou plusieurs serveurs virtuels qui lui sont dédiés parmi l'ensemble de serveurs virtuels au moyen de l'identifiant et d'une clé spécifique à l'utilisateur et/ou à chaque serveur virtuel, et d'administrer lesdits serveurs virtuels dédiés,
des composants d'interface pour la création et la gestion de l'ensemble des serveurs virtuels,
caractérisé en ce qu'il comporte les étapes suivantes selon lesquelles :
on fournit un module de sécurité, ledit module de sécurité étant administré par l'utilisateur du ou des serveurs virtuels qui lui sont dédiés au moyen d'une console de sécurité;
on fournit, audit module de sécurité, une ou plusieurs politiques de sécurité susceptibles d'être appliquées aux données gérées par les serveurs virtuels dédiés audit utilisateur, lesdites politiques de sécurité formant des règles de sécurité définissant la confidentialité, l'intégrité et/ou la disponibilité desdites données et/ou applications ;
on fournit, audit module de sécurité, la clé spécifique à l'utilisateur et/ou à chaque serveur dédié, pour l'accès aux serveurs virtuels dédiés de l'utilisateur ; on définit les politiques de sécurité destinées à être appliquées aux données et/ou applications gérées par les serveurs virtuels dédiés à l'utilisateur au moyen de la console de sécurité; le module de sécurité accède auxdits serveur virtuels dédiés de l'utilisateur au moyen de la clé d'accès spécifique; et
les serveurs virtuels dédiés appliquent les politiques de sécurité, qui ont été fournies audit module de sécurité et définies, aux données et/ou aux applications dont ils assurent la gestion.

De manière avantageuse, - le procédé comporte en outre les étape suivantes : un agent est installé sur un serveur virtuel dédié ; et le module de sécurité exporte les politiques de sécurité qui lui ont été fournies au serveur dédié sur lequel est installé l'agent ; - les politiques de sécurité fournies au module de sécurité sont appliquées aux serveurs virtuels dédiés par exécution distante, à partir dudit module de sécurité, au travers d'un canal sécurisé ; le procédé comporte en outre les étapes suivantes selon lesquelles : de nouveaux serveurs virtuels dédiés sont créés dynamiquement dans l'architecture informatique en nuage ; la clé spécifique à l'utilisateur et/ou à chaque serveur virtuel dédié nouvellement créé est fournie au module de sécurité ; et les nouveaux serveurs virtuels dédiés appliquent les politiques de sécurité qui leur ont été fournies par le module de sécurité aux données et/ou aux applications dont ils assurent la gestion ; - les politiques de sécurité appliquées aux données et/ou aux applications des nouveaux serveurs virtuels sont appliquées automatiquement ; - le module de sécurité est lui-même un serveur virtuel dédié contenu dans l'architecture informatique en nuage ; - le module de sécurité est fourni par un fournisseur de logiciels en tant que service dans l'architecture informatique en nuage ; - le module de sécurité est un module logiciel installé sur une station informatique physique de l'utilisateur ; - l'architecture comprend en outre un module d'enregistrement d'événements et en ce que le module de sécurité accède aux évènements enregistrés par ledit module d'enregistrement d'évènements pour les serveurs virtuels dédiés et effectue une vérification de l'application des politiques de sécurité par lesdits serveurs virtuels dédiés à partir desdits événements ; - - la clé spécifique à l'utilisateur et/ou à chaque serveur virtuel dédié est stockée dans le module de sécurité, dans un module d'une plate-forme de confiance, dans une carte à puce, ou chez un tiers de confiance ; - le procédé est mis en oeuvre dans une architecture informatique comportant une pluralité de nuages ; et - les données sont chiffrées dans les serveurs virtuels dédiés conformément à l'application d'une politique de sécurité appliquée auxdits serveurs ; - les données sont chiffrées selon les politiques de sécurité appliquées dans les serveurs virtuels dédiés de manière que, postérieurement à la délétion d'un serveur virtuel dédié, lesdites données ne soient plus lisibles et/ou de manière que à pallier aux attaques par canaux auxiliaires.

L'invention sera mieux comprise à la lecture de la description non limitative qui suit, rédigée au regard des dessins annexés, dans lesquels :
- les figues 1A, 1B et 1C schématisent différentes architectures informatiques dynamiques en nuage pour la mise en oeuvre du procédé selon l'invention ; et

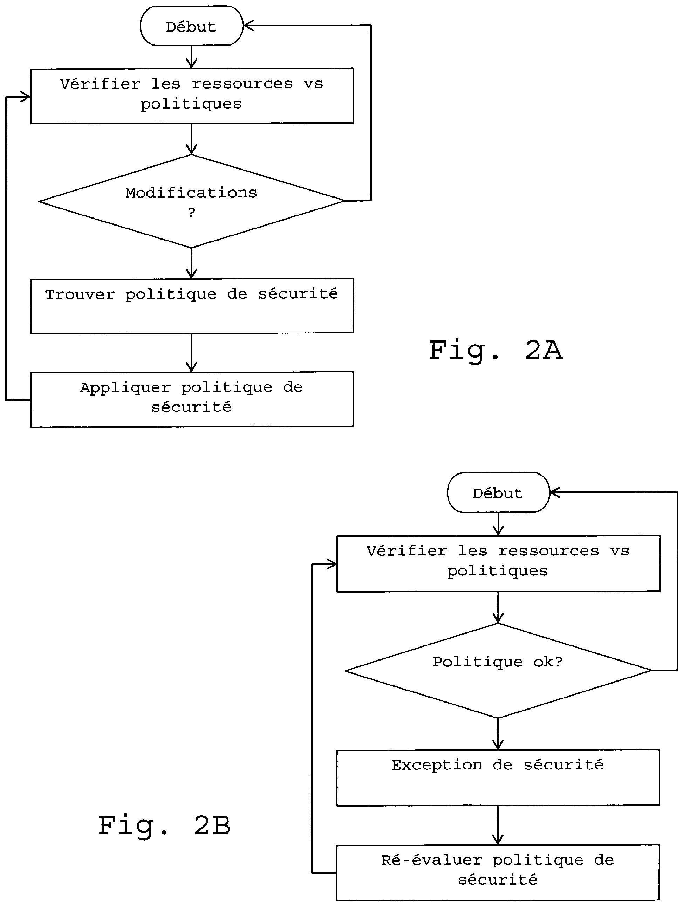

- les figures 2A et 2B sont des organigrammes montrant des modes de mise en oeuvre particulier du procédé selon l'invention.

Les architectures informatiques selon l'invention sont des architectures dynamiques en nuage.

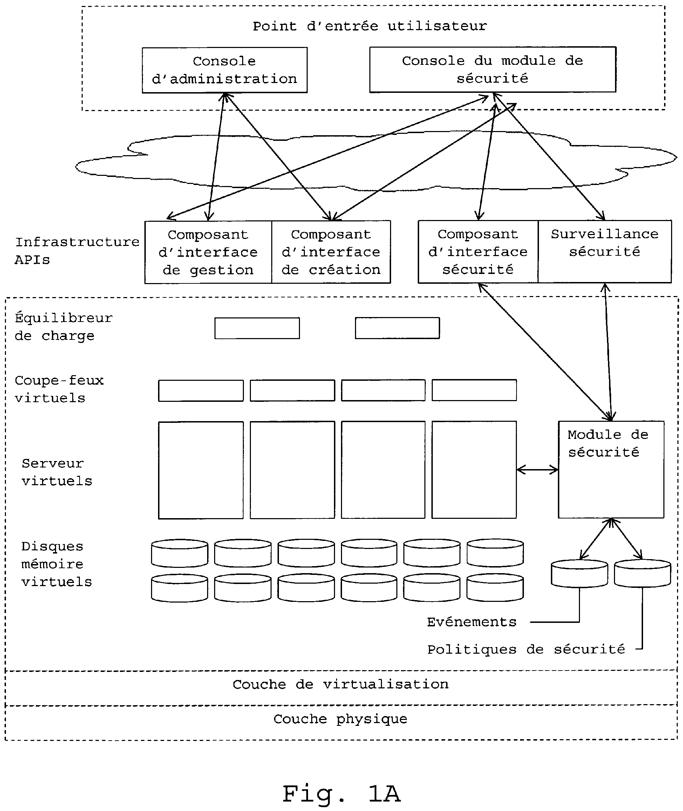

Ainsi que cela apparaît à la figure 1A, de telles architectures comprennent un ensemble de serveurs virtuels, lesdits serveurs virtuels comprenant éventuellement des agents particuliers installés ou non. Chaque serveur virtuel est identifié, dans l'architecture, par au moins un identifiant serveur. Par ailleurs, chaque serveur virtuel est associé à un ou plusieurs disques mémoire virtuels. Chaque disque mémoire virtuel est matérialisé par un ou plusieurs disques mémoire physiques. Ces disques physiques ne sont pas montrés à la figure 1A. Ils font cependant partie de la couche physique de l'architecture, contrairement aux instances virtuelles, qui font partie de la couche de virtualisation.

En outre, les architectures selon l'invention comprennent une interface, par exemple une console d'administration. Grâce à cette console d'administration, un utilisateur peut, en un point d'entrée utilisateur, accéder, au travers d'un réseau du type Internet, à un ou plusieurs serveurs virtuels qui lui sont dédiés parmi l'ensemble de serveurs virtuels. Cet accès est réalisé au moyen de l'identifiant du serveur virtuel dédié, et d'une clé spécifique à celui-ci. Cette clé spécifique est une clé d'accès à l'administration de l'infrastructure. D'autre part, l'utilisateur peut, au moyen de la console d'administration, administrer les serveurs virtuels qui lui sont dédiés.

Une infrastructure d'interfaces de programmation (APIs) permet notamment d'assurer la création et la gestion des serveurs virtuels dans l'architecture. Parmi ces APIs, on aura donc un composant d'interface de gestion et un composant d'interface de création.

L'architecture comprend des composants destinés à équilibrer la charge au sein de l'architecture, ainsi que des pare-feux (firewalls, en langue anglaise) virtuels.

Selon l'invention, l'architecture comprend en outre un module de sécurité. Ce module de sécurité est administré par l'utilisateur du ou des serveurs virtuels qui lui sont dédiés, par exemple, au moyen d'une console de module de sécurité disponible au point d'entrée utilisateur. L'infrastructure d'APIs est alors complétée par un composant d'interface sécurité et par un composant de surveillance sécurité.

Le module de sécurité a accès à une ou plusieurs politiques de sécurité susceptibles d'être appliquées aux données et/ou aux applications gérées par les serveurs virtuels dédiés audit utilisateur. Ces politiques de sécurité sont des ensembles de règles qui définissent, pour les données et/ou applications gérées par les serveurs virtuels dédiés, la confidentialité, l'intégrité et, avantageusement, la disponibilité.

La politique de sécurité peut être définie dans le langage XML XCCDF (extensible Configuration Checklist Description Format - Format de description de liste à configuration extensible), qui fait partie des spécifications SCAP (Security Content Automation Protocol - protocole d'automation contenu sécuritaire) du NIST (National Institute of Stantards and Technology). Ce langage permet de représenter un ensemble structuré de règles de sécurité de façon à supporter l'échange d'informations relatives à la sécurité et par conséquence de généraliser les bonnes pratiques de sécurité.

Dans un exemple, la confidentialité peut être conservée, selon une politique de sécurité, c'est-à-dire une règle, par le chiffrement systématique des données. Dans cet exemple simple la règle est « chiffrer de manière systématique les données ». Ce n'est pas la clé de chiffrement. Dans un autre exemple, l'intégrité peut être conservée, selon une politique de sécurité, au moyen d'une surveillance des fichiers de configuration d'une application. Dans ce cas, la règle est « surveiller les fichiers de configuration d'une application ». Dans un autre exemple encore, la disponibilité peut être gérée, selon une politique de sécurité, en réalisant une architecture redondante. La règle est alors « réaliser une architecture redondante ». De manière générale, une politique de sécurité comprend une pluralité de règles : « chiffrer de manière systématique les données ET surveiller les fichiers de configuration d'une application ET réaliser une architecture redondante. Les politiques de sécurité selon l'invention s'appliquent en général non seulement aux données mais aussi aux applications.

De surcroît, l'architecture comprend en outre un module d'enregistrement d'événements. Le module de sécurité accède aux évènements enregistrés par ledit module d'enregistrement d'événements pour les serveurs virtuels dédiés et effectue une vérification de l'application des politiques de sécurité par lesdits serveurs virtuels dédiés à partir desdits événements.

Dans le cas de la figure 1A, le module de sécurité est installé dans un serveur virtuel dédié de l'utilisateur qui souhaite mettre en oeuvre le procédé selon l'invention. Il s'agit donc d'un serveur virtuel dédié contenu dans l'architecture informatique en nuage.

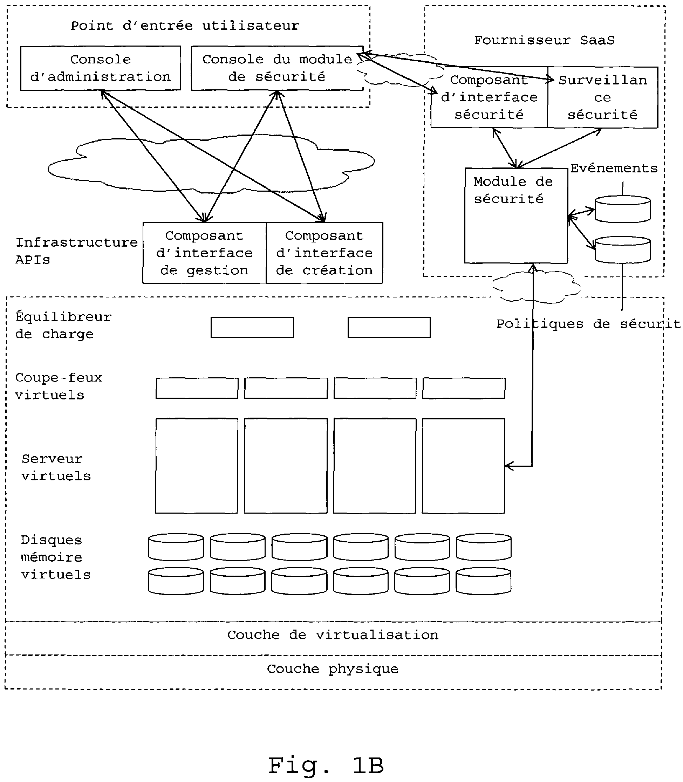

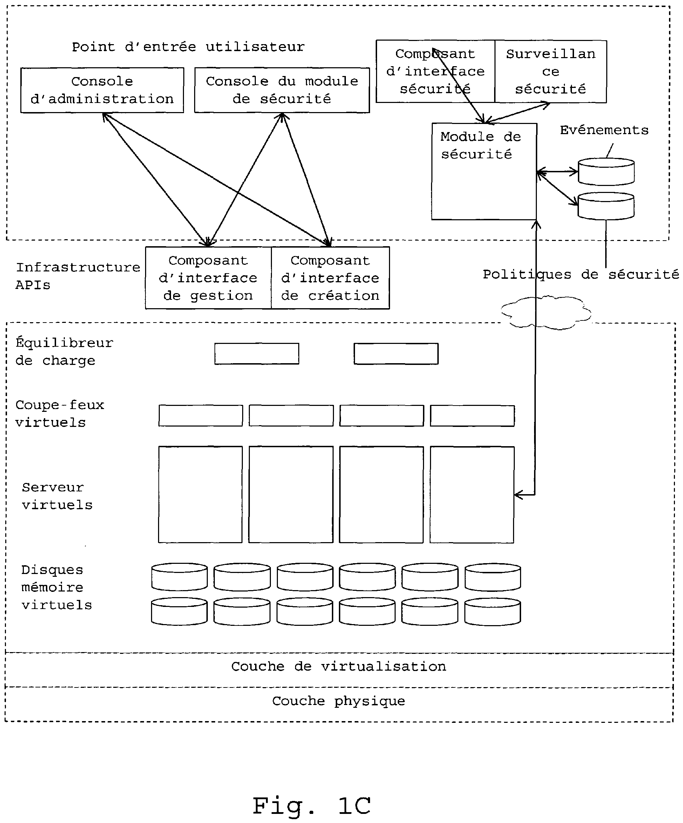

Toutefois, d'autres modes de réalisation peuvent être mis en oeuvre. Par exemple, et ainsi que cela est représenté à la figure 1B, le module de sécurité est un module géré directement par le fournisseur SaaS. Il est donc fourni par un fournisseur de logiciels en tant que service dans l'architecture informatique en nuage. Dans un autre exemple, qui est représenté à la figure 1C, le module de sécurité est installé sur la station informatique physique de l'utilisateur, qui constitue le point d'entrée dans l'architecture en nuage.

Le procédé selon l'invention se caractérise en ce qu'il comporte les étapes qui suivent.

Tout d'abord, on fournit le module de sécurité, ce module étant administré par l'utilisateur du ou des serveurs virtuels qui lui sont dédiés, au moyen de la console du module de sécurité. Le module de sécurité peut être installé au moyen d'un canal sécurisé, par exemple, en utilisant les protocoles SSL ou SSH. La console de sécurité comprend une interface graphique d'utilisation (GUI) qui permet à l'utilisateur de définir des politiques de sécurité telles que celles concernant par exemple la confidentialité et l'intégrité des données et/ou des applications stockées dans l'architecture, la surveillance des évènements relatif à la sécurité, l'établissement de réseaux privés virtuels.

Puis, on fournit, audit module de sécurité, une ou plusieurs politiques de sécurité susceptibles d'être appliquées aux données et/ou aux applications gérées par les serveurs virtuels dédiés audit utilisateur. Il s'agit donc dans un exemple des politiques de sécurité définies par l'utilisateur au moyen de la console de sécurité.

Dans l'exemple d'une architecture EC2™ d'Amazon™, les restrictions réseaux existantes, qui sont appliquées aux serveurs virtuels, par exemple les groupes de sécurité, sont extrapolées vers une politique de sécurité qui sera appliquée aux données et/ou aux applications qui sont gérées par les serveurs virtuels dédiés.

On fournit ensuite, audit module de sécurité, les identifiants ainsi que les clés d'accès des serveurs virtuels dédiés de l'utilisateur.

Le module de sécurité accède alors auxdits serveurs virtuels dédiés de l'utilisateur au moyen de la ou des clés d'accès qui ont été fournies au module de sécurité.

Il exporte les politiques de sécurité qui lui ont été fournies auxdits serveurs virtuels dédiés.

Puis, les serveurs virtuels dédiés appliquent les politiques de sécurité qui leur ont été fournies par le module de sécurité aux données et/ou aux applications dont ils assurent la gestion.

En pratique, les données en transit et stockées dans l'architecture sont ainsi sécurisées, sans que des modifications ne soient opérées au niveau application dans l'architecture.

On notera que les politiques de sécurité sont susceptibles d'être installées, au niveau des serveurs virtuels dédiés, selon deux mécanismes. Il s'agit tout d'abord d'un mécanisme procédant par exécution distante de commande au moyen d'un canal sécurisé, typiquement du type SSH. Il s'agit ensuite d'un mécanisme procédant par installation systématique d'agents sur tous ou une partie des serveurs. Dans ce dernier mécanisme, la console communique avec les agents au moyen d'un canal sécurisé. On notera en outre que les deux mécanismes peuvent être employés de manière concomitante.

Si l'utilisateur crée dynamiquement de nouveaux serveurs virtuels dédiés dans l'architecture informatique en nuage au moyen de la console d'administration, alors les identifiants et clés desdits serveurs virtuels dédiés nouvellement créés sont fournies au module de sécurité. Dans ce cas, le module de sécurité exporte automatiquement les politiques de sécurité fournies antérieurement pour d'autres serveurs virtuels dédiés aux nouveaux serveurs virtuels dédiés et les nouveaux serveurs virtuels dédiés appliquent les politiques de sécurité qui leur ont été fournies par le module de sécurité aux données et/ou aux applications dont ils assurent la gestion. En pratique, les politiques de sécurité appliquées aux données et/ou aux applications des nouveaux serveurs virtuels sont appliquées automatiquement. L'utilisateur n'intervient donc pas. On notera que, dans le cas où l'assertion de la sécurité requise n'est pas possible pour un serveur virtuel dédié particulier, on applique, selon l'invention, une politique de sécurité maximale.

Il en va de même si les serveurs virtuels dédiés sont créés dynamiquement, de manière automatique, sans intervention de l'utilisateur, en raison de la charge des serveurs virtuels dédiés déjà administrés par l'utilisateur.

Le procédé selon l'invention peut être mis en oeuvre sans contrôle de son fonctionnement. Toutefois, de manière avantageuse, en analysant les évènements liés aux serveurs virtuels sécurisés, on surveillera l'application de la politique de sécurité pour les données et/ou les applications. Dans le cas où une politique de sécurité maximale a été appliquée par défaut, les processus de monitoring, éventuellement couplés avec des phases d'apprentissage selon lesquelles sont détectées des itérations entre les ressources en environnement contrôlé, peuvent adapter les politiques de sécurité dans le cas d'exceptions.

Il existe donc préférentiellement deux processus de surveillance concurrents. Il s'agit tout d'abord d'un premier processus qui surveille les modifications dans l'infrastructure avec l'utilisation des APIs de gestion du fournisseur, par exemple, le lancement d'un nouveau serveur ou d'une unité de stockage. Dans ce premier processus, le module de sécurité découvre lui-même les modifications dans l'infrastructure. Il s'agit ensuite d'un second processus qui vérifie que la politique de sécurité est effectivement en place. Grâce à ce second processus, on vérifie, par exemple, si le stockage est effectivement chiffré en accord avec la politique de sécurité. Si l'un des processus génère des exceptions, alors celles-ci sont enregistrées et une tache est ajoutée en vue de résoudre cette exception.

Ces processus de surveillance sont susceptibles d'être gérés conjointement ou non.

Ainsi que cela est illustré à la figure 2A, pour la surveillance des modifications dans l'infrastructure, on vérifie, pour chacun des serveurs virtuels, les politiques appliquées. Si des modifications ont été apportées, par exemple si un serveur virtuel dédié a été créé dynamiquement, alors le module de sécurité trouve une politique de sécurité applicable aux données et/ou aux applications gérées par nouveau serveur virtuel. Cette politique est ensuite appliquée audit serveur. Si, par contre, aucune modification n'est apportée, alors on vérifie, pour chacun des serveurs virtuels, les politiques appliquées.

Dans une architecture informatique en nuage, le nombre de serveurs virtuels dédiés peut être réduit au cours du temps, par exemple si l'utilisateur souhaite supprimer un serveur. Une diminution du nombre de serveurs virtuels dédiés est susceptible d'avoir des incidences dans les politiques de sécurité appliquées, par exemple, la réduction de la tolérance aux pannes. La conséquence d'une diminution du nombre de serveurs virtuels dédiés peut dont être une violation d'une politique de sécurité. Dans le procédé selon l'invention, une telle diminution du nombre de serveurs virtuels dédiés est détectée, avantageusement de manière automatique, et est prise en compte. Les politiques de sécurité affectées sont alors susceptibles d'être modifiées. Toutefois, dans ce cas, préalablement à toute modification, des alarmes sont susceptibles d'être déclenchées. Il s'agit par exemple d'envoi d'e-mail ou de SMS. Aussi, il est possible de spécifier que la politique de sécurité est prioritaire.

Par ailleurs, on notera qu'un problème particulier dans une architecture informatique en nuage est la rémanence des données. En effet, lorsqu'un serveur ou un disque virtuel dédié est supprimé, les données sont susceptibles d'être conservées sur les disques. En chiffrant les données selon les politiques de sécurités appliquées dans les serveurs dédiés, les données conservées dans les disques virtuels supprimés resteront illisibles. La protection desdites données est ainsi assurées. Le chiffrement systématique protège aussi contre les attaques par canaux ouverts entre les colocataires des mêmes plates-formes physiques. Même si le colocataire réussit à dépasser l'isolation entre les machines virtuelles, il doit en outre découvrir les clés.

Ainsi que cela est illustré à la figure 2B, pour la vérification de la mise en place des politiques de sécurité au sein de l'infrastructure virtuelle dédiée, on vérifie, pour chacun des serveurs virtuels, les politiques appliquées. Une décision est alors prise : est-ce que la politique de sécurité est en adéquation avec les attentes ? Dans la négative, les exceptions de sécurité sont consultées et la politique de sécurité est réévaluée. Dans l'affirmative, une nouvelle vérification est effectuée.

On notera que, dans des variantes de réalisation du procédé selon l'invention, il est possible d'assurer la gestion des versions et la fonctionnalité de retour en arrière vers une infrastructure antérieure, la détection d'incidents comme la fuite d'informations, et l'optimisation des ressources, le contrôle des coûts et un prévisionnel des capacités.

On notera que la clé spécifique à l'utilisateur et/ou à chaque serveur dédié est susceptible d'être stockée dans les agents, dans le module de sécurité, qui comprend alors ou non, un module de plateforme de confiance (Trusted Platform Module ou TPM, en anglais), une carte à puce comprenant ou non un TPM disposée au niveau du poste utilisateur. Enfin, les clés peuvent être stockées par un tiers de confiance.

## Revendications

1. Procédé de sécurisation de données et/ou des applications dans une architecture informatique dynamique en nuage comprenant :
un ensemble de serveurs virtuels identifiés par des identifiants serveurs, chaque serveur virtuel étant associé à un ou plusieurs disques mémoire virtuels, chaque disque mémoire virtuel étant matérialisé par un ou plusieurs espaces mémoire dans un ou plusieurs disques mémoire physiques,
une interface permettant à un utilisateur distant d'accéder, au travers d'un réseau du type Internet, à un ou plusieurs serveurs virtuels qui lui sont dédiés parmi l'ensemble de serveurs virtuels au moyen d'une clé d'accès spécifique à l'utilisateur et/ou à chaque serveur virtuel, et d'administrer lesdits serveurs virtuels dédiés,
des composants d'interface pour la création et la gestion de l'ensemble des serveurs virtuels,
**caractérisé en ce qu'**il comporte les étapes suivantes selon lesquelles :
on fournit un module de sécurité, ledit module de sécurité étant administré par l'utilisateur du ou des serveurs virtuels qui lui sont dédiés au moyen d'une console de sécurité ;
on fournit, audit module de sécurité, une ou plusieurs politiques de sécurité susceptibles d'être appliquées aux données et/ou applications gérées par les serveurs virtuels dédiés audit utilisateur, lesdites politiques de sécurité formant des règles de sécurité définissant la confidentialité, l'intégrité et/ou la disponibilité desdites données et/ou applications ;
on fournit, audit module de sécurité, ladite clé d'accès spécifique à l'utilisateur et/ou à chaque serveur virtuel dédié, pour l'accès aux serveurs virtuels dédiés de l'utilisateur ;
on définit les politiques de sécurité destinées à être appliquées aux données et/ou applications gérées par les serveurs virtuels dédiés à l'utilisateur au moyen de la console de sécurité ;
le module de sécurité accède auxdits serveurs virtuels dédiés de l'utilisateur au moyen de la clé d'accès spécifique ; et
les serveurs virtuels dédiés appliquent les politiques de sécurité, qui ont été fournies audit module de sécurité et définies, aux données et/ou aux applications dont ils assurent la gestion.

2. Procédé selon la revendication 1, **caractérisé en ce qu'**il comporte en outre les étapes suivantes :
un agent est installé sur un serveur virtuel dédié ; et
le module de sécurité exporte les politiques de sécurité qui lui ont été fournies au serveur dédié sur lequel est installé l'agent.

3. Procédé selon l'une des revendications 1 ou 2, **caractérisé en ce que** les politiques de sécurité fournies au module de sécurité sont appliquées aux serveurs virtuels dédiés par exécution distante, à partir dudit module de sécurité, au travers d'un canal sécurisé.

4. Procédé selon l'une des revendications précédentes, **caractérisé en ce que** les restrictions réseaux existantes, qui sont appliquées aux serveurs virtuels, sont extrapolées vers une politique de sécurité qui sera appliquée aux données et/ou applications qui sont gérées par les serveurs virtuels dédiés.

5. Procédé selon l'une des revendications précédentes, **caractérisé en ce qu'**il comporte en outre les étapes suivantes selon lesquelles :
de nouveaux serveurs virtuels dédiés sont créés dynamiquement dans l'architecture informatique en nuage ;
la clé spécifique à l'utilisateur et/ou à chaque serveur virtuel dédié nouvellement créé est fournie au module de sécurité ; et
les nouveaux serveurs virtuels dédiés appliquent les politiques de sécurité qui leur ont été fournies par le module de sécurité aux données et/ou aux applications dont ils assurent la gestion.

6. Procédé selon la revendication 5, **caractérisé en ce que** les politiques de sécurité appliquées aux données et/ou aux applications des nouveaux serveurs virtuels sont appliquées automatiquement.

7. Procédé selon l'une des revendications précédentes, **caractérisé en ce que** le module de sécurité est lui-même un serveur virtuel dédié contenu dans l'architecture informatique en nuage.

8. Procédé selon l'une des revendications 1 à 6, **caractérisé en ce que** module de sécurité est fourni par un fournisseur de logiciels en tant que service dans l'architecture informatique en nuage.

9. Procédé selon l'une des revendications 1 à 6, **caractérisé en ce que** le module de sécurité est un module logiciel installé sur une station informatique physique de l'utilisateur.

10. Procédé selon l'une des revendications précédentes, **caractérisé en ce que** l'architecture comprend en outre un module d'enregistrement d'événements et **en ce que** le module de sécurité accède aux événements enregistrés par ledit module d'enregistrement d'événements pour les serveurs virtuels dédiés et effectue une vérification de l'application des politiques de sécurité par lesdits serveurs virtuels dédiés à partir desdits événements.

11. Procédé selon l'une des revendications précédentes, **caractérisé en ce que** la clé spécifique à l'utilisateur et/ou à chaque serveur virtuel dédié est stockée dans le module de sécurité, dans un module d'une plate-forme de confiance, dans une carte à puce, ou chez un tiers de confiance.

12. Procédé selon l'une des revendications précédentes, **caractérisé en ce qu'**il est mis en oeuvre dans une architecture informatique comportant une pluralité de nuages.

13. Procédé selon l'une des revendications précédentes, **caractérisé en ce que** les données sont chiffrées dans les serveurs virtuels dédiés conformément à l'application d'une politique de sécurité appliquée auxdits serveurs.

14. Procédé selon l'une des revendications précédentes, **caractérisé en ce que** les données sont chiffrées selon les politiques de sécurité appliquées dans les serveurs virtuels dédiés de manière que, postérieurement à la délétion d'un serveur virtuel dédié, lesdites données ne soient plus lisibles et/ou de manière que à pallier aux attaques par canaux auxiliaires.

## Patentansprüche

1. Verfahren zur Sicherung von Daten und/oder Anwendungen in einer dynamischen Cloud Computing Architecture, umfassend:
eine Einheit von virtuellen Servern, identifiziert durch Serveridentifikatoren, wobei jeder virtuelle Server mit einer oder mehreren virtuellen Speicherplatten assoziiert ist, wobei jede virtuelle Speicherplatte durch einen oder mehrere Speicherplätze in einer oder mehreren physischen Speicherplatten materialisiert ist,
eine Schnittstelle, die es einem entfernten Benutzer ermöglicht, über ein Netz vom Typ Internet auf einen oder mehrere virtuelle Server, die ihm zugewiesen sind, aus der Gruppe von virtuellen Servern mit Hilfe eines Zugriffsschlüssels, der für den Benutzer und/oder jeden virtuellen Server spezifisch ist, zuzugreifen und die zugewiesenen virtuellen Server zu verwalten, Schnittstellenkomponenten zur Erstellung und zum Management der Einheit der virtuellen Server,
**dadurch gekennzeichnet, dass** es die folgenden Schritte umfasst, nach denen:
ein Sicherheitsmodul bereitgestellt wird, wobei das Sicherheitsmodul vom Benutzer des oder der virtuellen Server, die ihm zugewiesen sind, mit Hilfe einer Sicherheitskonsole verwaltet wird;
dem Sicherheitsmodul eine oder mehrere Sicherheitspolitiken bereitgestellt werden, die auf die Daten und/oder Anwendungen angewendet werden können, die von den virtuellen Servern, die dem Benutzer zugewiesen sind, verwaltet werden, wobei die Sicherheitspolitiken Sicherheitsregeln bilden, die die Vertraulichkeit, die Integrität und/oder die Verfügbarkeit der Daten und/oder Anwendungen definieren;
dem Sicherheitsmodul der Zugriffsschlüssel, der für den Benutzer und/oder jeden zugewiesenen virtuellen Server spezifisch ist, für den Zugriff auf die zugewiesenen virtuellen Server des Benutzers bereitgestellt wird;
die Sicherheitspolitiken, die ausgelegt sind, um auf die Daten und/oder Anwendungen angewendet zu werden, die von den virtuellen Servern verwaltet werden, die dem Benutzer zugewiesen sind, mit Hilfe der Sicherheitskonsole definiert werden;
das Sicherheitsmodul auf die zugewiesenen virtuellen Server des Benutzers mit Hilfe des spezifischen Zugriffsschlüssels zugreift; und
die zugewiesenen virtuellen Server die Sicherheitspolitiken, die dem Sicherheitsmodul bereitgestellt und definiert wurden, auf die Daten und/oder auf die Anwendungen, deren Verwaltung sie sicherstellen, anwenden.

2. Verfahren nach Anspruch 1, **dadurch gekennzeichnet, dass** es außerdem die folgenden Schritte umfasst:
Installieren eines Agenten auf einem zugewiesenen virtuellen Server; und
Exportieren, durch das Sicherheitsmodul, der Sicherheitspolitiken, die ihm bereitgestellt wurden, an den zugewiesenen Server, auf dem der Agent installiert ist.

3. Verfahren nach einem der Ansprüche 1 oder 2, **dadurch gekennzeichnet, dass** sie Sicherheitspolitiken, die dem Sicherheitsmodul bereitgestellt wurden, auf die zugewiesenen virtuellen Server durch Fernbedienung ausgehend von dem Sicherheitsmodul über einen gesicherten Kanal angewendet werden.

4. Verfahren nach einem der vorhergehenden Ansprüche, **dadurch gekennzeichnet, dass** die vorhandenen Netzbeschränkungen, die auf die virtuellen Server angewendet werden, auf eine Sicherheitspolitik extrapoliert werden, die auf die Daten und/oder Anwendungen angewendet wird, die von den virtuellen Servern verwaltet werden,

5. Verfahren nach einem der vorhergehenden Ansprüche, **dadurch gekennzeichnet, dass** es die folgenden Schritte umfasst, nach denen:
neue zugewiesene virtuelle Server dynamisch in der Cloud Computing Architecture erzeugt werden;
der neu erzeugte Schlüssel, der für den Benutzer und/oder jeden virtuellen zugewiesenen Server spezifisch ist, dem Sicherheitsmodul bereitgestellt wird; und
neue zugewiesene virtuelle Server die Sicherheitspolitiken, die ihnen vom Sicherheitsmodul bereitgestellt wurden, auf die Daten und/oder die Anwendungen, deren Verwaltung sie sicherstellen, anwenden.

6. Verfahren nach Anspruch 5, **dadurch gekennzeichnet, dass** die Sicherheitspolitiken, angewendet auf die Daten und/oder Anwendungen der neuen virtuellen Server, automatisch angewendet werden.

7. Verfahren nach einem der vorhergehenden Ansprüche, **dadurch gekennzeichnet, dass** das Sicherheitsmodul selbst ein zugewiesener virtueller Server ist, der in der Cloud Computing Architecture enthalten ist.

8. Verfahren nach einem der Ansprüche 1 bis 6, **dadurch gekennzeichnet, dass** das Sicherheitsmodul von einem Softwarelieferanten bereitgestellt wird, als Service in der Cloud Computing Architecture.

9. Verfahren nach einem der Ansprüche 1 bis 6, **dadurch gekennzeichnet, dass** das Sicherheitsmodul ein Softwaremodul ist, das auf einer physischen Computerstation des Benutzers installiert ist.

10. Verfahren nach einem der vorhergehenden Ansprüche, **dadurch gekennzeichnet, dass** die Architektur außerdem ein Modul zur Aufzeichnung von Ereignissen umfasst, und dadurch, dass das Sicherheitsmodul auf die durch das Modul zur Aufzeichnung von Ereignissen für die zugewiesenen virtuellen Server aufgezeichneten Ereignisse zugreift und eine Überprüfung der Anwendung der Sicherheitspolitiken durch die zugewiesenen virtuellen Server ausgehend von den Ereignissen durchführt.

11. Verfahren nach einem der vorhergehenden Ansprüche, **dadurch gekennzeichnet, dass** der Schlüssel, der für den Benutzer und/oder jeden zugewiesenen virtuellen Server spezifisch ist, im Sicherheitsmodul, in einem Modul einer vertraulichen Plattform, in einer Chipkarte oder bei einer vertraulichen dritten Partei gespeichert wird.

12. Verfahren nach einem der vorhergehenden Ansprüche, **dadurch gekennzeichnet, dass** es in einer Computerarchitektur durchgeführt wird, die eine Vielzahl von Clouds umfasst.

13. Verfahren nach einem der vorhergehenden Ansprüche, **dadurch gekennzeichnet, dass** die Daten in den zugewiesenen virtuellen Servern chiffriert sind, gemäß der Anwendung einer Sicherheitspolitik, die auf die Server angewendet wird.

14. Verfahren nach einem der vorhergehenden Ansprüche, **dadurch gekennzeichnet, dass** die Daten gemäß den Sicherheitspolitiken chiffriert sind, die in den zugewiesenen virtuellen Servern derart angewendet sind, dass nach dem Löschen eines zugewiesenen virtuellen Servers Daten nicht mehr lesbar sind, und/oder derart, dass die Angriffe durch Hilfskanäle abgestellt werden.

## Claims

1. Method for securing data and/or applications in a dynamic cloud computing architecture comprising:
a set of virtual servers identified by server identifiers, with each virtual server associated with one or more virtual memory discs, with each virtual memory disc being materialised by one or more memory spaces in one or more physical memory discs,
an interface allowing a remote user to access, via a network of the Internet type, one or more virtual servers which are dedicated to said user from the set of virtual servers by means of an access key which is specific to the user and/or to each virtual server, and to administer said dedicated virtual servers,
interface components for creating and managing the set of virtual servers,
**characterised in that** it comprises the following steps according to which:
a security module is provided, said security module being administered by the user of the virtual server or servers which are dedicated to said user by means of a security console;
said security module is provided with one or more security policies able to be applied to the data and/or applications managed by the virtual servers dedicated to said user, said security policies forming security rules defining the confidentiality, the integrity and/or the availability of said data and/or applications;
said security module is provided with said access key which is specific to the user and/or to each dedicated virtual server, for accessing the dedicated virtual servers of the user;
the security policies intended to be applied to the data and/or applications managed by the virtual servers dedicated to the user are defined by means of the security console;
the security module accesses said dedicated virtual servers of the user by means of the specific access key; and
the dedicated virtual servers apply the security policies, which have been provided to said security module and defined, to the data and/or to the applications that they manage.

2. Method according to claim 1, **characterised in that** it further comprises the following steps:
an agent is installed on a dedicated virtual server; and the security module exports the security policies that it was provided with to the dedicated server whereon the agent is installed.

3. Method according to one of claims 1 or 2, **characterised in that** the security policies provided to the security module are applied to the dedicated virtual servers by remote execution, from said security module, through a secure channel.

4. Method according to one of the preceding claims, **characterised in that** the existing network restrictions, which are applied to the virtual servers, are extrapolated to a security policy which will be applied to the data and/or applications that are managed by the dedicated virtual servers.

5. Method according to one of the preceding claims, **characterised in that** it further comprises the following steps according to which:
new dedicated virtual servers are dynamically created in the cloud computing architecture;
the key which is specific to the user and/or to each newly created dedicated virtual server is provided to the security module; and
the new dedicated virtual servers apply the security policies which have been provided to them by the security module to the data and/or to the applications that they manage.

6. Method according to claim 5, **characterised in that** the security policies applied to the data and/or to the applications of new virtual servers are automatically applied.

7. Method according to one of the preceding claims, **characterised in that** the security module itself is a dedicated virtual server contained in the cloud computing architecture.

8. Method according to one of claims 1 to 6, **characterised in that** the security module is provided by a software supplier as a service in the cloud computing architecture.

9. Method according to one of claims 1 to 6, **characterised in that** the security module is a software module installed on a physical computer station of the user.

10. Method according to one of the preceding claims, **characterised in that** the architecture further comprises a module for recording events and **in that** the security module accesses the events recorded by said module for recording events for the dedicated virtual servers and checks whether the security policies have been applied by said dedicated virtual servers based on said events.

11. Method according to one of the preceding claims, **characterised in that** the key which is specific to the user and/or to each dedicated virtual server is stored in the security module, in a module of a trusted platform, in a smart card, or with a trusted third party.

12. Method according to one of the preceding claims, **characterised in that** it is implemented in a computing architecture comprising a plurality of clouds.

13. Method according to one of the preceding claims, **characterised in that** the data is encrypted in the dedicated virtual servers in accordance with the application of a security policy applied to said servers.

14. Method according to one of the preceding claims, **characterised in that** the data is encrypted according to the security policies applied in the dedicated virtual servers in such a way that, after the deletion of a dedicated virtual server, said data is no longer readable and/or so as to overcome side-channel attacks.
